# EUROPEAN PATENT APPLICATION

(11) **EP 4 418 435 A1**
(43) Date of publication of application: **21.08.2024**
(21) Application number: 24152811.6
(22) Date of filing: 19.01.2024
(51) Int. Cl.: H01M 50/342, H01M 10/42, H01M 10/48, H01M 50/204

(54) **A VENT FOR DETECTING THERMAL RUNAWAY IN A BATTERY PACK**

(30) Priority: 03.02.2023 IN 202311007104
(71) Applicant: Honeywell International Inc., Charlotte, NC 28202 (US)
(72) Inventor: KUMAR, Nirmal A., Charlotte, 28202 (US); SANCHIHAR, Paresh, Charlotte, 28202 (US)
(74) Representative: Haseltine Lake Kempner LLP

(57) **Abstract**

An example apparatus, method, and computer program product for detecting thermal runaway in a battery pack are provided. The example apparatus may include a membrane, a light source, and a light sensing diode, disposed within a vent housing. In some embodiments, the membrane may be positioned between a battery compartment, including a battery cell, and an external environment. In some embodiments, the light source and the light sensing diode may be on opposite sides of the membrane. In an instance in which a pressure within the battery compartment exceeds a maximum internal pressure such that the membrane is ruptured, the light sensing diode may receive light from the light source. In some embodiments, receiving light from the light source at the light sensing diode may be an indication of an onset of thermal runaway.

## Description

### TECHNOLOGICAL FIELD

Embodiments of the present disclosure relate generally to battery pack mechanisms for detecting thermal runaway, and more particularly, to a battery pack vent configured to detect the onset of thermal runaway in one or more battery cells within the battery pack.

### BACKGROUND

Applicant has identified many technical challenges and difficulties associated with detecting the onset of thermal runaway in the early stages. Through applied effort, ingenuity, and innovation, Applicant has solved problems related to utilizing a battery pack vent to detect thermal runaway in the early stages, which are described in detail below.

### BRIEF SUMMARY

Various embodiments are directed to an example method, apparatus, and computer program product for utilizing a vent to detect thermal runaway in a battery pack.

In accordance with some embodiments of the present disclosure, an example apparatus for detecting thermal runaway in a battery pack is provided. The example apparatus may comprise a membrane disposed between a battery compartment comprising a battery cell and an external environment, a light source, and a light sensing diode. In some embodiments, the light source and the light sensing diode may be on opposite sides of the membrane. In an instance in which a pressure within the battery compartment exceeds a maximum internal pressure such that the membrane is ruptured, the light sensing diode may receive light from the light source indicating an onset of thermal runaway.

In some embodiments, the example apparatus may further comprise a battery enclosure, wherein the battery enclosure comprises one or more battery enclosure walls enclosing the battery cell and defining the battery compartment.

In some embodiments, the example apparatus may further comprise a vent housing, wherein the membrane, the light source, and the light sensing diode are disposed within the vent housing.

In some embodiments, the vent housing may be disposed within the one of the one or more battery enclosure walls.

In some embodiments, the membrane may comprise a porous material enabling one or more gases to pass through the membrane between the battery compartment and the external environment.

In some embodiments, the membrane may comprise expanded polytetrafluoroethylene (ePTFE).

In some embodiments, the maximum internal pressure may be between 20 and 25 pounds per square inch.

In some embodiments, the membrane may be circular, wherein a diameter of the membrane is between 30 millimeters and 60 millimeters, and wherein a thickness of the membrane is between 5 and 20 millimeters.

In some embodiments, the light source and the light sensing diode may be separated by a distance of less than 3 centimeters.

In some embodiments, the example apparatus may further comprise a controller, wherein the controller is electrically connected to the light source and the light sensing diode.

In some embodiments, the light source may comprise one or more light emitting diodes (LEDs).

In some embodiments, the light source may be configured to emit infrared light.

An example method for detecting an onset of thermal runaway in a battery cell is further provided. The method may comprise enabling a light source, receiving an electrical output from a light sensing diode, and determining the onset of thermal runaway based at least in part on the electrical output from the light sensing diode. In some embodiments, the electrical output may be associated with an intensity of light received at the light sensing diode. In some embodiments, the light source and the light sensing diode may be on opposite sides of a membrane disposed between a battery compartment comprising a battery cell and an external environment. In an instance in which a pressure within the battery compartment exceeds a maximum internal pressure such that the membrane is ruptured, the light sensing diode may receive light from the light source.

In some embodiments, enabling the light source may further comprise disabling and subsequently reenabling the light source.

In some embodiments, determining the onset of thermal runaway may further comprise detecting a voltage increase in the electrical output of the light sensing diode, indicating the light sensing diode is receiving light from the light source.

In some embodiments, the membrane, the light source, and the light sensing diode may be disposed within a vent housing. In addition, vent housing may be disposed within a battery enclosure wall of a battery enclosure comprising one or more battery enclosure walls positioned to enclose the battery cell.

An example computer program product for detecting an onset of thermal runaway in a battery cell is further provided. The example computer program product may comprise at least one non-transitory computer-readable storage medium having computer-readable program code portions stored therein. In some embodiments, the computer-readable program code portions may comprise an executable portion configured to enable a light source, receive an electrical output from a light sensing diode, and determine the onset of thermal runaway based at least in part on the electrical output from the light sensing diode. In some embodiments, the electrical output may be associated with an intensity of light received at the light sensing diode. Further, in some embodiments, the light source and the light sensing diode may be on opposite sides of a membrane disposed between a battery compartment comprising a battery cell and an external environment. In addition, in an instance in which a pressure within the battery compartment exceeds a maximum internal pressure such that the membrane is ruptured, the light sensing diode may receive light from the light source.

In some embodiments, enabling the light source may further comprise disabling and subsequently reenabling the light source.

In some embodiments, determining the onset of thermal runaway may further comprise detecting a voltage increase in the electrical output of the light sensing diode, indicating the light sensing diode is receiving light from the light source.

In some embodiments, the membrane, the light source, and the light sensing diode may be disposed within a vent housing. In addition, the vent housing may be disposed within a battery enclosure wall of a battery enclosure comprising one or more battery enclosure walls positioned to enclose the battery cell.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example thermal runaway progression in accordance with an example embodiment of the present disclosure.
FIG. 2 illustrates an example battery pack including a battery vent in accordance with an example embodiment of the present disclosure.
FIG. 3A depicts an example battery vent of an example battery pack under normal operating conditions in accordance with an example embodiment of the present disclosure.
FIG. 3B depicts an example battery vent of an example battery pack experiencing thermal runaway in accordance with an example embodiment of the present disclosure.
FIG. 4 illustrates an example battery pack including a thermal runaway detection vent in accordance with an example embodiment of the present disclosure.
FIG. 5 illustrates an example thermal runaway detection vent operated by a controller in accordance with an example embodiment of the present disclosure.
FIG. 6 depicts an example thermal runaway detection vent in which the membrane has ruptured in accordance with an example embodiment of the present disclosure.
FIG. 7 illustrates an example block diagram showing example components of an example controller in accordance with an example embodiment of the present disclosure.
FIG. 8 depicts an example flowchart of an example method for detecting thermal runaway in a battery pack in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with determining the onset of thermal runaway. As understood by those of skill in the field to which the present disclosure pertains, there are numerous scenarios in which it may be advantageous to detect thermal runaway in its early stage, providing an opportunity to mitigate the hazardous condition before the thermal runaway becomes irreversible.

In general, batteries (e.g., lithium-ion batteries, lithium-polymer batteries, etc.) may undergo a chemical reaction within a battery cell to supply power to various devices. Devices requiring substantial amounts of power, such as electric vehicles, may contain tens or even hundreds of battery cells in a battery pack.

Battery cells utilizing chemical reactions to generate power may be susceptible to a number of dangerous conditions, for example thermal runaway. In certain circumstances, the movement of electrons and lithium ions in the battery cell may produce heat faster than the battery pack can dissipate the generated heat. Once the internal temperature of the battery cell reaches a certain point, the temperature of the battery cell may rise uncontrollably until the battery cell combusts. Not only can this dangerous condition occur in an individual battery cell but thermal runaway can cause an uncontrollable rise in temperature in the battery cells commonly contained within a battery pack, causing neighboring battery cells to also enter into thermal runaway. Eventually, a battery cell and/or battery pack, may combust causing an extremely hazardous condition. A battery cell may progress through the stages of thermal runaway rapidly, providing little time to detect and mitigate the hazardous condition before the chain reaction is irreversible.

In some instances, thermal runaway may result from stress and abuse on the battery cells. In some instances, the abuse may be immediate and apparent, for example, a battery cell on an electric vehicle may be punctured or ruptured by flying debris, leading to thermal runaway. In other instances, the abuse leading to thermal runaway may occur over an extended period of time. For example, overcharging, over-discharging, exposure to high and low temperatures, and/or physical damage to the battery cells over an extended period of time may affect the internal operation of the battery cells, resulting in thermal runaway.

In some instances, chronic overcharging and/or discharging may lead to plating and the formation of dendrites, which may subsequently cause short circuits. In addition, many stresses and/or abuses experienced over an extended period of time may cause the chemical properties of the chemicals within the battery cell to slowly change over time. Due to the concealed nature of many of these factors and the sudden onset of thermal runaway, it can be difficult to predict and/or detect a thermal runaway event before it is too late.

The onset of thermal runaway may be preceded by the various stages of battery decay. For example, the battery cell may experience electrolysis, electrolyte vaporization, and first venting before entering into thermal runaway. Each of these stages is evidenced by particular characteristics, such as a particular range of temperatures, internal pressures, and the presence of certain gases. For example, the pressure within a battery pack may steadily increase over time due to internal chemical reactions, the rise in temperature within the battery pack, emitted gases, and other factors.

Battery packs may include mechanisms to manage the fluctuation of pressure during normal battery operation. For example, battery packs may include one or more porous membrane portions (e.g., vents) in the wall of the battery pack that enable air to flow into and out of the internal battery compartment of the battery pack while keeping out external substances such as water, dust, and oil. Such venting mechanisms may alleviate pressure within the battery compartment in two stages. A first stage may allow air flow through the porous membrane enabling pressure equalization with the external environment in an instance in which a battery pack experiences a gradual change in pressure, for example, during normal operation of an electric vehicle. However, in some instances, the pressure in the internal compartment of the battery pack may change suddenly and drastically, such as during thermal runaway. When the change in pressure is sudden and drastic, the porous membrane will rupture, allowing gases in the internal battery compartment to escape. The rupture of the membrane is the second stage for alleviating pressure and may help in mitigating the effects of thermal runaway by releasing some of the vented gases from the battery cells and the built up pressure in the battery compartment. However, due to the chain-reaction nature of thermal runaway, often, once thermal runaway has started, it may not be stopped. As such, in some instances the battery cell will continue to overheat and eventually combust even after the battery vent ruptures and the pressure is released. Additionally, the overheating and combustion from a single battery cell may propagate to adjacent battery cells, in some instances leading to a battery pack explosion. Such characteristics of thermal runaway require that thermal runaway be detected at an early stage, when mitigating actions may still be taken.

Current thermal runaway detection systems may utilize various sensors in close proximity to the battery cells to determine the condition of the battery cell based on the physical characteristics around the battery cell. For example, a temperature sensor may be placed on or near the surface of the battery cell. When the temperature measurement exceeds a pre-determined max operating temperature, the thermal runaway detection system may issue a warning or alert. Similarly, pressure sensors may be placed on or near the surface of the battery cell and may be configured to transmit an alert of thermal runaway when the pressure within a battery pack exceeds a pre-determined max operating pressure. Detection systems utilizing temperature sensors and pressure sensors are often expensive and may be difficult to configure within the confines of a battery pack. In addition, the sensors utilized to detect thermal runaway may require additional power supply and communication lines wired from the battery pack to an outside power source and/or communication module.

The various example embodiments described herein utilize various techniques to detect thermal runaway in a battery cell in the early stages, enabling mitigating actions to be taken before the thermal runaway is irreversible. For example, in some embodiments, a battery pack may be equipped with a thermal runaway detection vent, aiding in the detection of thermal runaway. In some embodiments, the thermal runaway detection vent may include a light source and a light sensing diode on opposite sides of a porous membrane. The light source may be directed at the light sensing diode, however, while the porous membrane is intact, none of the light emitted by the light source is received by the light sensing diode. In an instance in which the pressure in the battery compartment drastically increases, such as during thermal runaway, the porous membrane may burst, exposing the light sensing diode to the light source. A connected controller may receive and analyze the electrical output of the light sensing diode. In an instance in which a sudden increase in light intensity received at the light sensing diode results in an increased electrical output to the controller, the controller may determine the battery pack is experiencing thermal runaway.

As a result of the herein described example embodiments and in some examples, the effectiveness of a thermal runaway detection system may be greatly improved. In addition, the thermal runaway detection vent may be implemented without a significant increase in cost, required power, or modification to the battery pack.

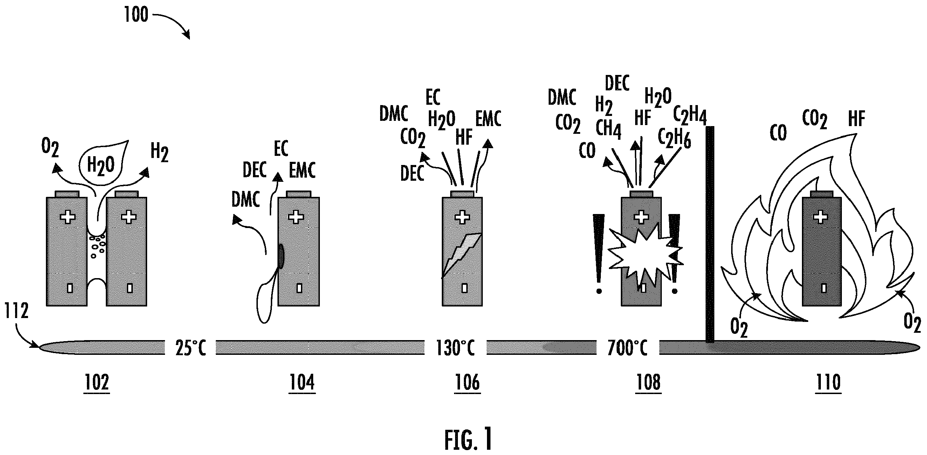

Referring now to FIG. 1, a chart illustrating an example thermal runaway progression 100 in a battery cell is provided. As depicted in FIG. 1, the example thermal runaway progression 100 comprises five stages, for example, electrolysis 102, electrolyte vaporization 104, first venting 106, thermal runaway 108, and catastrophic explosion 110. Each stage of the thermal runaway progression 100 is associated with a certain temperature or range of temperatures within the battery cell, as shown by the temperature scale 112. In addition, each stage of the thermal runaway progression 100 may be associated with a certain pressure or range of pressures within the battery compartment, as well as other characteristics such as the presence of certain gases. During all operational stages of the battery, the porous membrane of the battery vent may allow the flow of gas in and out of the battery compartment to equalize the pressure within the battery compartment. For example, in some embodiments, gas may begin to pass through the porous membrane when the pressure in the battery compartment exceeds 4.3 pounds per square inch.

As depicted in FIG. 1, the first stage of the example thermal runaway progression 100 is electrolysis 102. During electrolysis 102, the electrolyte between the anode and cathode of the battery cell, begins to break down. Electrolysis 102 is characterized by elevated gas levels, specifically elevated gas levels of oxygen and hydrogen. The operating temperature and the pressure readings remain constant, in a normal operating range for the battery cell and the environment during electrolysis. For example, the operating temperature may be between 20°C and 80°C, while the pressure may remain below about 14.5 pounds per square inch.

As further depicted in FIG. 1, the second stage of the example thermal runaway progression is electrolyte vaporization 104. During the electrolyte vaporization 104, the electrolyte between the anode and cathode within the battery cells fully breaks down. Electrolyte vaporization 104 may be characterized by a slight elevation in the internal pressure of the battery cell. The slight elevation in pressure may trigger the transfer of gas through the porous membranes of the one or more battery vents, equalizing the pressure within the battery compartment. Electrolyte vaporization 104 may also be characterized by a slight increase in temperature, for example, between 80°C and 100°C and the presence of distinct gases, for example, elevated levels of ethylene carbonate (EC), dimethyl carbonate (DMC), diethyl carbonate (DEC), and/or ethyl methyl carbonate (EMC).

As further depicted in FIG. 1, the third stage of the example thermal runaway progression is first venting 106. During first venting 106, the buildup of gas due to the decomposition of the electrolyte inside the battery cell may cause a drastic increase in the internal pressure of the interior battery compartment, leading to deformations in the casing of the battery cell and eventually the rupture of the porous membranes of the one or more battery vents disposed in the wall of the battery case. The rupture of the porous membrane may allow gases within the battery compartment to exit, alleviating some of the built up pressure within the battery compartment. First venting may be characterized by an internal pressure in the battery compartment above 14.5 pounds per square inch, with rupture of the porous membrane, in some embodiments, occurring around 21 pounds per square inch. First venting 106 may additionally be characterized by an initial increase in temperature, for example, between 120°C and 300°C along with elevated gas levels of EC, DMC, DEC, EMC, and carbon dioxide.

As further depicted in FIG. 1, the fourth stage of the example thermal runaway progression is thermal runaway 108. During thermal runaway 108, chemical reactions within the battery cells continue due to a continued increase in temperature causing a severe and sudden increase of temperature. Once thermal runaway 108 is reached, the chain reaction leading to catastrophic explosion 110 is often irreversible. In an instance in which a plurality of battery cells are in close proximity, thermal runaway 108 may spread to neighboring battery cells. Thermal runaway 108 may be characterized by elevated gas levels of EC, DMC, DEC, EMC, methane, carbon monoxide, ethanol, and carbon dioxide. In some embodiments, thermal runaway 108 is characterized by a temperature at or exceeding 300°C and less than 800°C.

As further depicted in FIG. 1, the final stage of the example thermal runaway progression is catastrophic explosion 110. During catastrophic explosion 110 a battery may catch fire and/or explode creating an extremely dangerous situation. During catastrophic explosion 110 the temperature of the battery cell may exceed 800°C. The uncontrolled combustion during catastrophic explosion 110 is extremely hazardous to the operating device and any people and objects in close proximity.

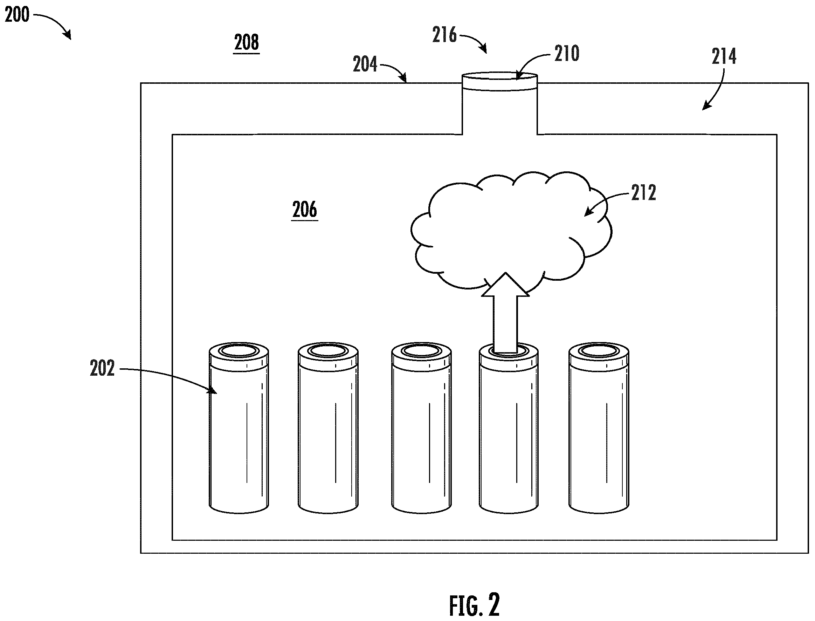

Referring now to FIG. 2, an example battery pack 200 is provided. As depicted in FIG. 2, the example battery pack 200 includes a battery enclosure 204 comprising a battery enclosure wall 214, the battery enclosure 204 defining a battery compartment 206 internal to the battery enclosure 204 and an external environment 208 without the battery enclosure 204. As further shown, a plurality of battery cells 202 are disposed within the battery compartment 206. As further depicted in FIG. 2, a battery cell 202 is emitting a gas 212 within the battery compartment 206. In addition, the battery enclosure wall 214 of the battery enclosure 204 includes a battery vent 216.

As depicted in FIG. 2, the example battery pack 200 includes a plurality of battery cells 202. A battery cell 202 may be any electrochemical device utilizing chemical reactions to generate electrical energy. Chemical reactions within a battery cell 202 may involve transmitting ions between a positively charged electrode (cathode) and a negatively charged electrode (anode). When a battery cell 202 provides power to a load, the flow of the electrons from the anode to the cathode generates electric current flowing from the cathode to the anode. A battery cell may contain any of a large variety of chemical compositions (e.g., lithium-nickel-manganese-cobalt oxides, lithium-iron phosphates, etc.). A battery cell 202 facilitating such chemical reactions may be susceptible to a decay process resulting in thermal runaway as described in relation to FIG. 1.

A battery cell 202 may take any form, including but not limited to cylindrical cells, prismatic cells, pouch cells, etc. Some devices requiring large amounts of power, such as an electric vehicle may contain tens or hundreds of battery cells 202 in a battery pack 200. The battery cells 202 within a battery pack 200 may be electrically connected in parallel and/or series to provide an accumulated power output to the operating device (e.g., an electric vehicle).

As further depicted in FIG. 2, the example battery pack 200 includes a battery enclosure 204 surrounding the battery cells 202 and defining a battery compartment 206 interior to the battery enclosure 204 and an external environment 208, exterior to the battery enclosure 204. A battery enclosure 204 may be any structure, packaging, housing, and/or compartment for enclosing and/or protecting the battery cells 202. The battery enclosure 204 may further define a space or compartment (e.g., battery compartment 206) into which the internal battery components and battery cells 202 may be disposed. In some embodiments, the battery enclosure 204 may comprise aluminum, steel, or other metals; plastics and/or reinforced plastics; or any other material capable of protecting the interior components and one or more battery cells 202 of the battery pack 200. In some embodiments, the battery enclosure 204 may be manufactured to conform with an industry standard, such as IP67. In some embodiments, the battery enclosure 204 may provide structures to support, attach, and/or separate the battery cells 202, as well as wiring, and/or other internal components of the battery pack 200. Many electric vehicles today have begun arranging large numbers of battery cells 202 into a battery enclosure 204 that is integrated as part of the body of the electric vehicle. This technology has largely come to be known as cell-to-chassis technology. Such a battery arrangement may be particularly prone to thermal runaway and eventual combustion as a result of mechanical, electrical and/or thermal stress and abuse.

As further depicted in FIG. 2, the example battery enclosure 204 includes a plurality of battery enclosure walls 214. The battery enclosure 204 may consist of one or more battery enclosure walls 214. As described herein, the battery enclosure walls 214 may comprise aluminum, steel, or other metals; plastics and/or reinforced plastics; or any other material capable of protecting the interior components and one or more battery cells 202. In some embodiments, the battery enclosure walls 214 may further provide attachment structures, cavities, openings, or other devices to attach sensing devices, battery vents (e.g., battery vent 216), or other devices in support of the management of the battery pack 200 and included components.

As further depicted in FIG. 2, the battery cells 202 within the battery enclosure 204 of the battery pack 200 may release gases 212 during the operation of the battery cell 202. In some embodiments, a battery cell 202 experiencing an increase in internal pressure due, for example, to the decay of the internal components of the battery cell 202, may release gases 212 into the surrounding environment (e.g., battery compartment 206). Internal pressure may build in a battery cell 202, due to a deteriorating separator layer, electrolyte degradation, increased heat due to a short circuit, and many other factors. In some embodiments, a battery cell 202 may include a safety vent to release gases 212 in an instance in which the internal pressure of the battery cell 202 exceeds a maximum internal pressure. Gases 212 may include a variety of gases depending upon the cause for venting and the chemical make-up of the battery cell 202. Some gases 212 may be released during electrolyte vaporization 104 of the thermal runaway progression 100. However, significant gases 212 may be released during first venting 106, causing an increase in pressure within the battery compartment 206. In some examples, gases 212 may include an abnormal or elevated level of an otherwise common gas, such as oxygen or hydrogen. In some embodiments, gases 212 may include VOCs, including, for example, dimethyl carbonate (DMC), diethyl carbonate (DEC), and/or ethyl methyl carbonate (EMC) methane.

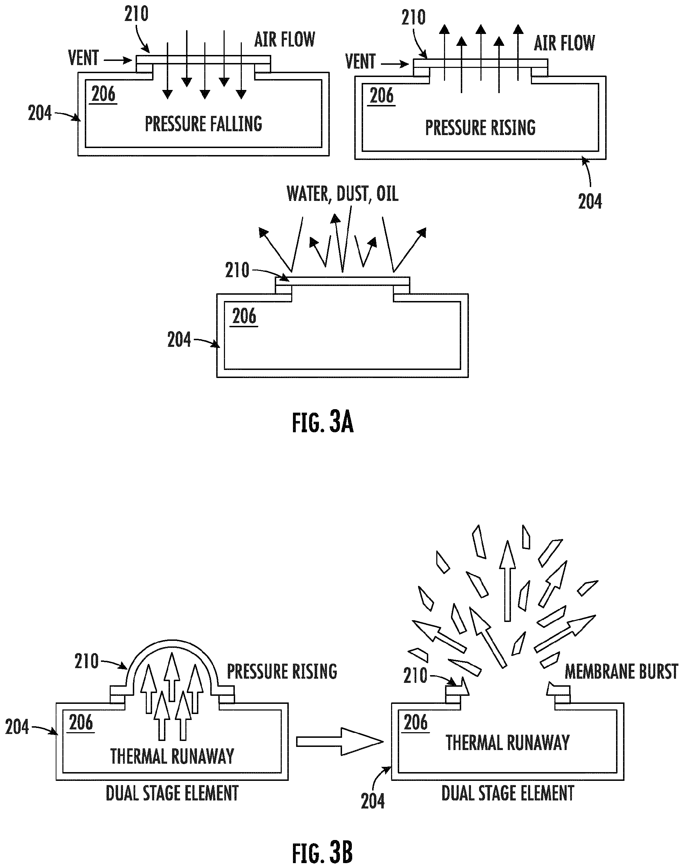

As further depicted in FIG. 2, the example battery pack 200 includes a battery vent 216. A battery vent 216 may be any structure or device utilized to regulate the flow of gas (e.g., gas 212) into and out of the battery compartment 206. A battery vent 216 may comprise any material, device, flap, or other structure configured to open, burst, puncture, or otherwise rupture when the pressure within the battery compartment 206 exceeds a certain maximum pressure. In some embodiments, the battery vent 216 may be a portion of the battery enclosure wall 214 that is compromised, weakened, and/or comprised of a weaker material, such that the portion is configured to burst or otherwise open in an instance in which the internal pressure of the battery compartment 206 exceeds a maximum internal pressure. In some embodiments, the battery vent 216 may comprise a porous membrane 210. In such an embodiment, the porous nature of the membrane may enable the battery vent 216 to mitigate changes in internal pressure in multiple stages, as further described in relation to FIG. 3A and FIG. 3B. By opening, bursting, puncturing, or otherwise rupturing in an instance in which the internal pressure exceeds a maximum internal pressure, the battery vent 216 may allow for the rapid release of built-up gases 212. This release may, at least temporarily, help to mitigate the rapid rise in temperature and pressure build-up within the battery compartment 206.

Although only one battery vent 216 is depicted in the battery enclosure 204 of FIG. 2, a battery enclosure 204 may include a plurality of battery vents 216 positioned at different locations on the battery enclosure 204.

Referring now to FIG. 3A and FIG. 3B, illustrations are provided of an example battery vent 216 configured to support venting in two stages, for example, during standard operation (FIG. 3A) and under thermal runaway conditions (FIG. 3B).

As depicted in FIG. 3A, during standard operation, a battery enclosure 204 comprising an example battery vent 216 allows air and other gases (e.g., gas 212) to move in and out of the battery compartment 206. Allowing air and other gases to pass through the battery vent 216 is an example of a first stage of venting. During such a first stage, subtle, minor, and/or gradual changes in pressure may be equalized by allowing gas to pass through the porous membrane 210 of the battery vent 216. The porous membrane 210 may comprise any material that allows air and other gases to pass through but blocks other substances, such as water, dust, oil, and light. In some embodiments, a porous membrane 210 of a battery vent 216 may comprise a thermoplastic polymer, such as expanded polytetrafluoroethylene (ePTFE). An embodiment comprising ePTFE may allow gas to be released from the battery compartment 206 through the porous membrane 210 of the battery vent 216 when the pressure in the battery compartment 206 exceeds, for example, 4 pounds per square inch.

As further depicted in FIG. 3B, when the pressure within the battery compartment 206 exceeds a maximum internal pressure, the porous membrane 210 of the battery vent 216 is ruptured, allowing the gas within the battery compartment 206 to escape. The release of gases internal to the battery compartment 206 may, at least temporarily, mitigate the rapid rise in temperature and pressure build-up within the battery compartment 206. An embodiment including a porous membrane comprising ePTFE, or similar material, may rupture when a maximum pressure in the battery compartment 206 (e.g., maximum internal pressure) is exceeded. A maximum internal pressure may be between 15 and 25 pounds per square inch; more preferably between 19 and 23 pounds per square inch; and most preferably between 20 and 22 pounds per square inch.

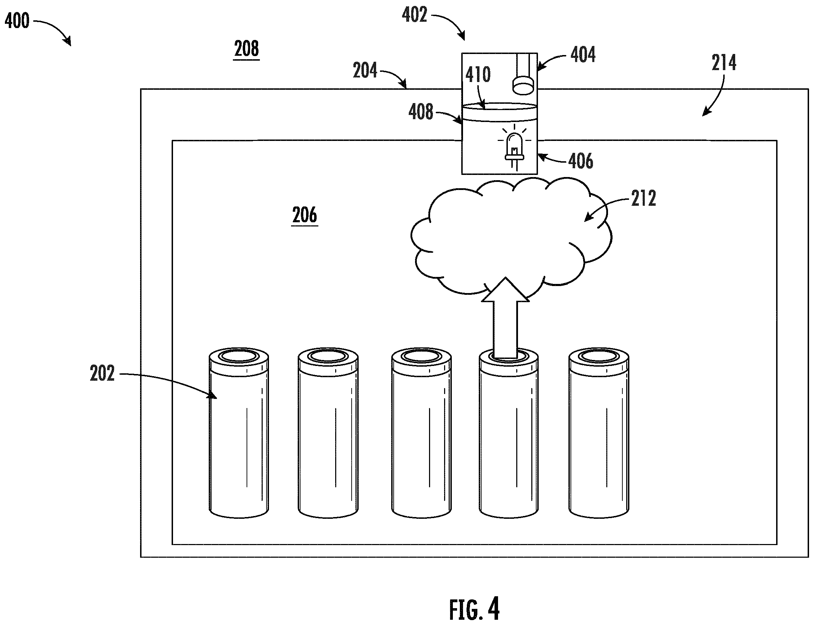

Referring now to FIG. 4, an example battery pack 400 is provided. As depicted in FIG. 4, the example battery pack 400 includes a battery enclosure 204 comprising a battery enclosure wall 214, the battery enclosure 204 defining a battery compartment 206 internal to the battery enclosure 204, including a plurality of battery cells 202, and an external environment 208 without the battery enclosure 204. As depicted in FIG. 4, a battery cell 202 is emitting a gas 212 within the battery compartment 206. As further depicted in FIG. 4, the example battery back 400 includes a thermal runaway detection vent 402 disposed within the battery enclosure wall 214 of the battery enclosure 204. The example thermal runaway detection vent 402 includes a porous membrane 410 positioned between the battery compartment 206 and the external environment 208, with a light source 406 disposed proximate the porous membrane 410 within the battery compartment 206 and a light sensing diode 404 disposed opposite the porous membrane 410 and directed to receive light from the light source 406.

As depicted in FIG. 4, the example battery pack 400 includes a thermal runaway detection vent 402. The example thermal runaway detection vent 402 as depicted in FIG. 4 includes a vent housing 408, enclosing a light sensing diode 404 and a light source 406 on opposite sides of a porous membrane 410.

As depicted in FIG. 4, the example thermal runaway detection vent 402 includes a vent housing 408. The vent housing 408 may be any housing, structure, packaging, case, or similar device configured to position the thermal runaway detection vent 402 within the battery enclosure wall 214, such that a first side of the thermal runaway detection vent 402 interacts with the air/gas within the battery compartment 206 and a second side of the thermal runaway detection vent 402 interacts with the external environment 208. In some embodiments, the vent housing 408 may comprise a case and/or protective caps to protect the components of the thermal runaway detection vent 402 while still exposing the porous membrane to air and gases in both the battery compartment 206 and the external environment 208. In some embodiments, the vent housing 408 may comprise structures to facilitate mounting the internal components of the thermal runaway detection vent 402, for example, the light sensing diode 404, the light source 406, and the porous membrane 410. In some embodiments, the vent housing 408 may provide electrical connections to facilitate receipt of power from an outside power source and/or facilitate electrical communication between the thermal runaway detection vent 402 and various connected components.

As further depicted in FIG. 4, the example thermal runaway detection vent 402 may comprise a porous membrane 410. As described herein, a porous membrane 410 may comprise any material that allows air and other gases to pass through while blocking other larger molecules, such as water, dust, oil, and light for example ePTFE. In some embodiments, a porous membrane 410 may be circular comprising a diameter between 20 and 70 millimeters; more preferably between 25 and 65 millimeters; most preferably between 30 and 60 millimeters; and a thickness between 4 and 21 millimeters; more preferably between 4.5 and 21.5 millimeters; most preferably between 5 and 20 millimeters. A porous membrane 410 may allow air/gas to pass through to equalize moderate changes in pressure within the battery compartment 206. In an instance in which the pressure within the battery compartment 206 exceeds a maximum internal pressure, the porous membrane 410 of the thermal runaway detection vent 402 may be ruptured, allowing the gas within the battery compartment 206 to escape. The release of gases internal to the battery compartment 206 may, at least temporarily, mitigate the rapid rise in temperature and pressure build-up within the battery compartment 206.

In addition, the ruptured porous membrane 410 may be an indicator of the onset of thermal runaway. As described herein, some gases (e.g., gas 212) may be released during the electrolyte vaporization 104 of the thermal runaway progression 100 and a significant amount of gas 212 may be released during first venting 106, causing an increase in pressure within the battery compartment 206. The released gases during the electrolyte vaporization 104 and during first venting 106 may cause a significant increase in internal pressure within the battery compartment 206, causing the porous membrane 410 to rupture. Recognizing thermal runaway during the early phases, such as during electrolyte vaporization 104 or first venting 106, may enable mitigating actions to be taken to prevent the further progression of thermal runaway.

As further depicted in FIG. 4, the example thermal runaway detection vent 402 includes a light source 406. A light source 406 may any device, bulb, semiconductor, diode, laser, or other photon-emitting structure configured to output light. The light source 406 may be configured to output light at a specific wavelength or spectrum of wavelengths. For example, the light source 406 may be configured to output infrared light having a wavelength between 0.75 micrometers and 15 micrometers. In some embodiments, the light source 406 may be directional, meaning the projection of the transmitted light is in a direction, such as a light beam. In such an instance, the direction of the transmitted light may be aimed in the direction of the light sensing diode 404. In some embodiments, the light source 406 may be omni-directional, meaning the projection of the transmitted light is in all directions and is not aimed at a single object such as light sensing diode 404. In some embodiments, the light source 406 may comprise a light emitting diode (LED). Although depicted in FIG. 4 within the battery compartment 206, the light source 406 may be disposed on either side of the porous membrane 410 as long as the light sensing diode 404 is disposed opposite the porous membrane 410 and the light sensing diode 404 is proximate the light source 406 such that in an instance in which the porous membrane 410 is ruptured, the light sensing diode 404 may receive light emitted from the light source 406.

As further depicted in FIG. 4, the example thermal runaway detection vent 402 includes a light sensing diode 404. A light sensing diode 404, may be any light sensitive device, sensor, semiconductor, or other structure that produces an electric current in an instance in which the light sensing diode 404 is exposed to photons from a light source. In some embodiments, the light sensing diode 404 may be a light sensitive semiconductor diode that creates an electron-hole pair at the p-n junction when a photon of sufficient energy strikes the diode. In some embodiments, the electric current output by the light sensing diode 404 may be proportional to the intensity of the light received at the light sensing diode 404. For example, the electric current output by the light sensing diode 404 may increase as the number of photons that strike the light sensing diode 404 per second increases. In such an embodiment, the electric current output from the light sensing diode 404 may be used to determine the intensity of light striking the light sensing diode 404.

In some embodiments, the light sensing diode 404 may be isolated from other sources of light, such that in an instance in which the porous membrane 410 ruptures, the light sensing diode 404 is exposed to the light source 406 resulting in an easily detectable increase in the electrical output from the light sensing diode 404. Although depicted in FIG. 4 outside of the battery compartment 206, the light sensing diode 404 may be disposed on either side of the porous membrane 410 as long as the light source 406 is disposed on the opposite side of the porous membrane 410. In addition, in some embodiments the light sensing diode 404 may be within close proximity of the light sensing diode 404, for example within 1-2 centimeters. The close proximity of the light sensing diode 404 and the light source 406 enables a detectable increase in the electrical output of the light sensing diode 404 in an instance in which the light sensing diode 404 is exposed to the light source 406. Further, the close proximity of the light sensing diode to the light source 406 may enable the light source 406 to operate at a low power.

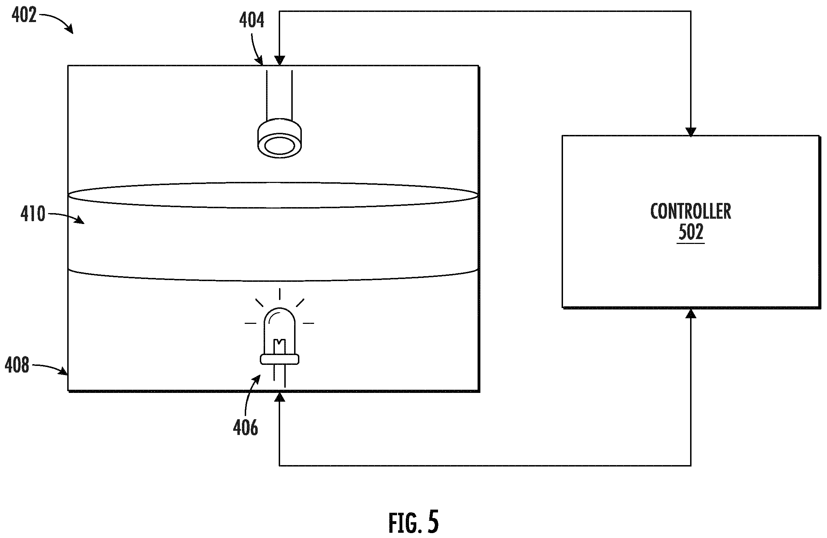

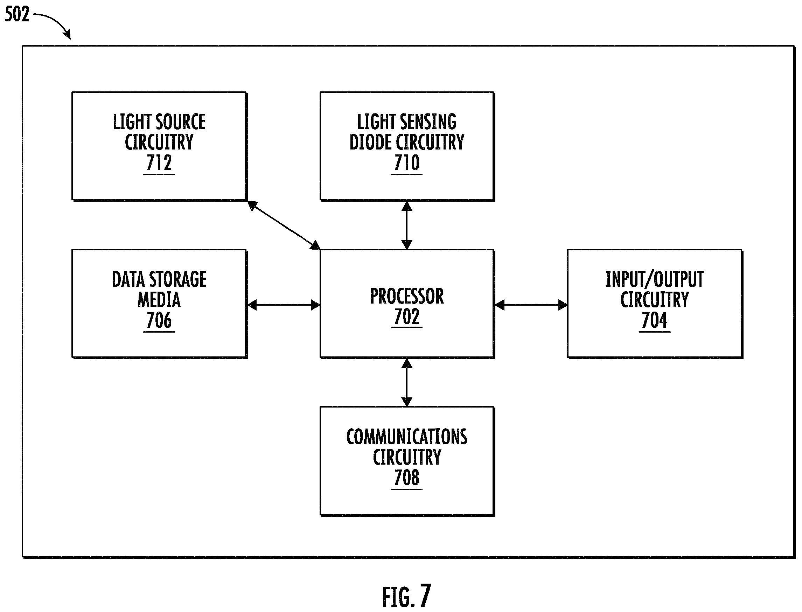

Referring now to FIG. 5, an example thermal runaway detection vent 402 electrically connected to a controller 502 is provided. As depicted in FIG. 5, the controller 502 may be electrically and/or communicatively connected with both the light source 406 and the light sensing diode 404. The controller 502 may control the light output from the light source 406 and analyze the electrical output received from the light sensing diode 404 to determine if the porous membrane 410 has ruptured. In addition, as depicted in FIG. 5, the light source 406, the porous membrane 410, and the light sensing diode, may all be disposed within a vent housing 408. An example block diagram and corresponding description of an example controller 502 are described in relation to FIG. 7.

As depicted in FIG. 5, the porous membrane 410 separating the light source 406 from the light sensing diode 404 remains intact. In such an instance, light emitted by the light source 406 is blocked by the porous membrane 410 and thus never reaches the light sensing diode 404. As such, the electrical output from the light sensing diode 404 remains low, for example, near 0 milliamps.

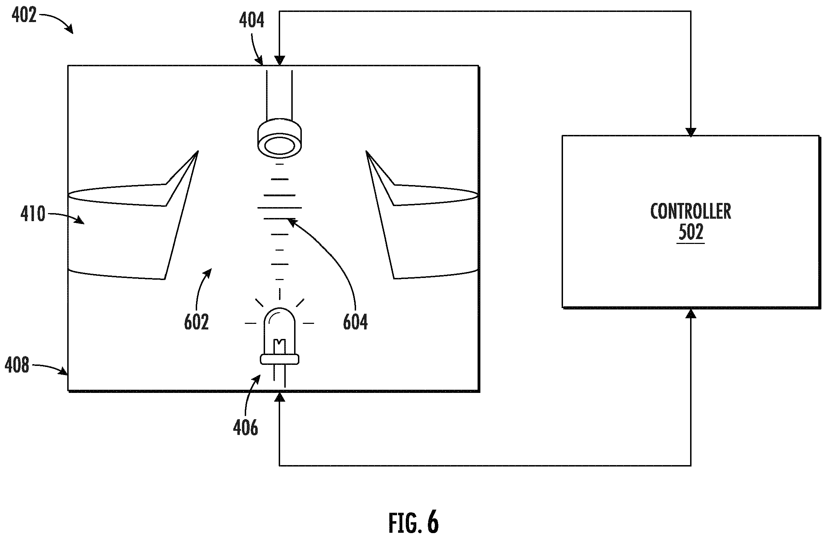

Referring now to FIG. 6, an example thermal runaway detection vent 402 is provided having a light source 406 and a light sensing diode 404 on opposite sides of a porous membrane 410 and each electrically and/or communicatively connected to a controller 502. As depicted in FIG. 6, the porous membrane 410 is ruptured creating an opening 602 between the light source 406 and the light sensing diode 404, such that light 604 emitted by the light source 406 is received by the light sensing diode 404.

As depicted in FIG. 6, in an instance in which the porous membrane 410 is ruptured, for example due to a pressure in the battery compartment (e.g., battery compartment 206) exceeding the maximum operating pressure, an opening 602 is created between the light source 406 and the light sensing diode 404. In such an instance, light 604 emitted from the light source 406 is received by the light sensing diode 404. The receipt of light 604 at the light sensing diode 404 may cause a distinguishable increase in the electrical output of the light sensing diode 404, such that the controller 502 may recognize that the porous membrane 410 has ruptured, indicating an increase in the pressure within a battery compartment 206 and the potential onset of thermal runaway.

FIG. 7 illustrates an example controller 502 in accordance with at least some example embodiments of the present disclosure. The controller 502 includes processor 702, input/output circuitry 704, data storage media 706, communications circuitry 708, light sensing diode circuitry 710, and light source circuitry 712. In some embodiments, the controller 502 is configured, using one or more of the sets of circuitry 702, 704, 706, 708, 710, and/or 712, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the controller 502 provide or supplement the functionality of other particular sets of circuitry. For example, the processor 702 in some embodiments provides processing functionality to any of the sets of circuitry, the data storage media 706 provides storage functionality to any of the sets of circuitry, the communications circuitry 708 provides network interface functionality to any of the sets of circuitry, and/or the like.

In some embodiments, the processor 702 (and/or co-processor or any other processing circuitry assisting or otherwise associated with the processor) is/are in communication with the data storage media 706 via a bus for passing information among components of the controller 502. In some embodiments, for example, the data storage media 706 is non-transitory and may include, for example, one or more volatile and/or non-volatile memories. In other words, for example, the data storage media 706 in some embodiments includes or embodies an electronic storage device (e.g., a computer readable storage medium). In some embodiments, the data storage media 706 is configured to store information, data, content, applications, instructions, or the like, for enabling the controller 502 to carry out various functions in accordance with example embodiments of the present disclosure.

The processor 702 may be embodied in a number of different ways. For example, in some example embodiments, the processor 702 includes one or more processing devices configured to perform independently. Additionally or alternatively, in some embodiments, the processor 702 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 502, and/or one or more remote or "cloud" processor(s) external to the controller 502.

In an example embodiment, the processor 702 is configured to execute instructions stored in the data storage media 706 or otherwise accessible to the processor. Alternatively or additionally, the processor 702 in some embodiments is configured to execute hard-coded functionality. As such, whether configured by hardware or software methods, or by a combination thereof, the processor 702 represents an entity (e.g., physically embodied in circuitry) capable of performing operations according to an embodiment of the present disclosure while configured accordingly. Alternatively or additionally, as another example in some example embodiments, when the processor 702 is embodied as an executor of software instructions, the instructions specifically configure the processor 702 to perform the algorithms embodied in the specific operations described herein when such instructions are executed.

As one particular example embodiment, the processor 702 is configured to perform various operations associated with enabling a light source (e.g., light source 406). Additionally or alternatively, in some embodiments, the processor 702 includes hardware, software, firmware, and/or a combination thereof, that receives an electrical output from a light sensing diode (e.g., light sensing diode 404), wherein the electrical output is associated with an intensity of light received at the light sensing diode, wherein the light source and the light sensing diode are on opposite sides of a membrane (e.g., porous membrane 210, porous membrane 410) disposed between a battery compartment (e.g., battery compartment 206) comprising a battery cell (e.g., battery cell 202) and an external environment (e.g., external environment 208), and wherein in an instance in which a pressure within the battery compartment exceeds a minimum pressure such that the membrane is ruptured, the light sensing diode receives light from the light source. Additionally or alternatively, in some embodiments, the processor 702 includes hardware, software, firmware, and/or a combination thereof, that determines the onset of thermal runaway based at least in part on the electrical output from the light sensing diode.

In some embodiments, the controller 502 includes input/output circuitry 704 that provides output to the user and, in some embodiments, to receive an indication of a user input. In some embodiments, the input/output circuitry 704 is in communication with the processor 702 to provide such functionality. The input/output circuitry 704 may comprise one or more user interface(s) (e.g., user interface) and in some embodiments includes a display that comprises the interface(s) rendered as a web user interface, an application user interface, a user device, a backend system, or the like. The processor 702 and/or input/output circuitry 704 comprising the processor may be configured to control one or more functions of one or more user interface elements through computer program instructions (e.g., software and/or firmware) stored on a memory accessible to the processor (e.g., data storage media 706, and/or the like). In some embodiments, the input/output circuitry 704 includes or utilizes a user-facing application to provide input/output functionality to a client device and/or other display associated with a user.

In some embodiments, the controller 502 includes communications circuitry 708. The communications circuitry 708 includes any means such as a device or circuitry embodied in either hardware or a combination of hardware and software that is configured to receive and/or transmit data from/to a network and/or any other device, circuitry, or module in communication with the controller 502. In this regard, the communications circuitry 708 includes, for example in some embodiments, a network interface for enabling communications with a wired or wireless communications network. Additionally or alternatively in some embodiments, the communications circuitry 708 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 708 includes circuitry for interacting with the antenna(s) and/or other hardware or software to cause transmission of signals via the antenna(s) or to handle receipt of signals received via the antenna(s). In some embodiments, the communications circuitry 708 enables transmission to and/or receipt of data from a client device in communication with the controller 502.

The light sensing diode circuitry 710 includes hardware, software, firmware, and/or a combination thereof, that supports various functionality associated with command and control of a light sensing diode (e.g., light sensing diode 404) or photodiode. For example, in some embodiments, the light sensing diode circuitry 710 includes hardware, software, firmware, and/or a combination thereof to issue commands directly to the one or more photodiodes, and/or issue commands to a printed circuit board comprising the one or more photodiodes. Commands issued by the light sensing diode circuitry 710 may include configuring parameters of the photodiodes, configuring feedback parameters of the photodiodes, or other similar commands. Additionally or alternatively, in some embodiments, the light sensing diode circuitry 710 may include hardware, software, firmware, and/or a combination thereof, to receive electrical output of the one or more photodiodes and/or the printed circuit board comprising the one or more photodiodes. In some embodiments, the electrical output received by the light sensing diode circuitry 710 may correspond with the intensity of light received by the photodiode. In some embodiments, the electrical output may be received as an analog signal by the light sensing diode circuitry 710 while in other embodiments, the electrical output may be received as a digital signal at the light sensing diode circuitry 710.

The light source circuitry 712 includes hardware, software, firmware, and/or a combination thereof, that supports various functionality associated with command and control of a light source (e.g., light source 406), for example an LED. In some embodiments, the light source circuitry 712 includes hardware, software, firmware, and/or a combination thereof to issue commands directly to the light source, and/or issue commands to circuitry providing an interface with the light source. Commands issued by the light source circuitry 712 may include configuration of parameters associated with the light source, such as intensity of the light source, periodic durations at which the light is illuminated, parameters related to the wavelength of the emitted light, or other similar commands. For example, in some embodiments, the light source circuitry 712 may blink the light source for a pre-determined duration to preserve power.

Additionally or alternatively, in some embodiments, one or more of the sets of circuitry 702-712 are combinable. Additionally or alternatively, in some embodiments, one or more of the sets of circuitry perform some or all of the functionality described associated with another component. For example, in some embodiments, one or more sets of circuitry 702-712 are combined into a single module embodied in hardware, software, firmware, and/or a combination thereof. Similarly, in some embodiments, one or more of the sets of circuitry, for example light sensing diode circuitry 710, and/or light source circuitry 712, is/are combined such that the processor 702 performs one or more of the operations described above with respect to each of these circuitry individually.

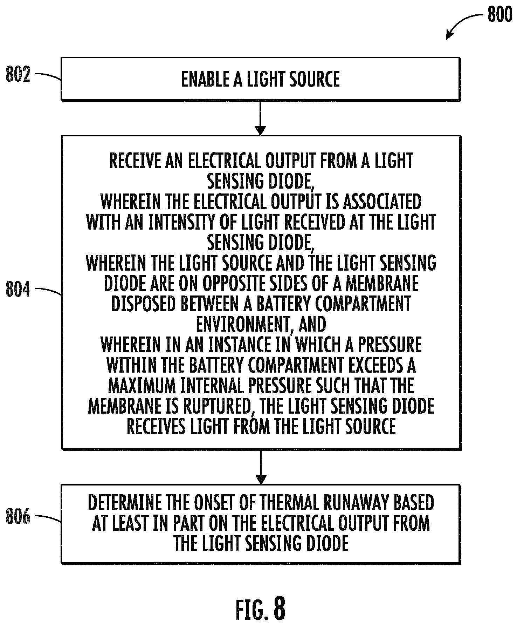

Referring now to FIG. 8, a flowchart 800 illustrating an example method for utilizing a battery vent to detect thermal runaway in a battery cell is provided.

At block 802, a controller (e.g., controller 502) may enable a light source (e.g., light source 406). By enabling the light source, the controller may cause the light source to emit light directed toward the light sensing diode opposite the porous membrane. The controller may manipulate the timing, intensity, wavelength, and other characteristics associated with the light source. In some embodiments, the controller may enable a light source outputting infrared light, for example light with wavelengths ranging from 0.75 micrometers to 15 micrometers. In some embodiments, the controller may configure the light source to periodically output light, for example, the controller may configure the light source to turn on once every second.

At block 804, the controller may receive an electrical output from a light sensing diode (e.g., light sensing diode 404), wherein the electrical output is associated with an intensity of light received at the light sensing diode, wherein the light source and the light sensing diode are on opposite sides of a membrane (e.g., porous membrane 210, porous membrane 410) disposed between a battery compartment (e.g., battery compartment 206) comprising a battery cell (e.g., battery cell 202) and an external environment (e.g., external environment 208), and wherein in an instance in which a pressure within the battery compartment exceeds a maximum internal pressure such that the membrane is ruptured, the light sensing diode receives light from the light source.

In some embodiments, a porous membrane may be configured to tolerate an internal pressure within the battery compartment up to a maximum internal pressure. For example, a maximum internal pressure may be between 15 and 25 pounds per square inch; more preferably between 19 and 23 pounds per square inch; and most preferably between 20 and 22 pounds per square inch. In an instance in which the maximum internal pressure is exceeded, for example, due to the onset of thermal runaway, the porous membrane may rupture, releasing gases and pressure from the battery compartment. A thermal runaway detection vent (e.g., thermal runaway detection vent 402) in accordance with one or more embodiments of the present disclosure, may include a light source and a light sensing diode facing each other on opposite sides of the porous membrane. In an instance in which the porous membrane ruptures, the light sensing diode may be exposed to the light from the light source.

At block 806, the controller may determine the onset of thermal runaway based at least in part on the electrical output from the light sensing diode. In some embodiments, exposure to the light source due to the rupture of the porous membrane may result in a detectable increase in the current of the electrical output of the light sensing diode. For example, a light sensing diode housed within the thermal runaway detection vent may receive little to no light at the light sensing diode. However, in an instance in which the porous membrane is ruptured the light sensing diode may be almost immediately exposed to the light from the light source, causing a sudden increase in the current of the electrical output.

A controller may utilize various algorithmic techniques to detect the increase in electrical output due to the exposure of the light sensing diode to the light source. For example, a controller may set a threshold current for the electrical output from the light sensing diode. In an instance in which the threshold current is exceeded, the controller may determine the onset of thermal runaway is occurring or is likely to occur. As another example, a controller may detect a sudden rise in the current associated with the electrical output of the light sensing diode, correlated with a sudden increase in light received at the light sensing diode. A sudden rise may be detected based on the gradient of the curve over a particular time period. The controller may also establish a baseline current based on an operating current received from the light sensing diode during normal operation. In an instance in which the baseline current is exceeded by a pre-determined percentage, the controller may determine the onset of thermal runaway is occurring or is likely to occur.

Further, in an instance in which the controller determines that the onset of thermal runaway is occurring, or is likely to occur, the controller and/or another connected module may initiate mitigating actions. For example, power may be disabled to the battery cell in decay. Further, in some embodiments, visual, audio, and/or other signals may be issued warning of the decay of the battery cell and the likely onset of thermal runway.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of' Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. An apparatus comprising:
a membrane disposed between a battery compartment comprising a battery cell and an external environment;
a light source; and
a light sensing diode,
wherein the light source and the light sensing diode are on opposite sides of the membrane, and
wherein in an instance in which a pressure within the battery compartment exceeds a maximum internal pressure such that the membrane is ruptured, the light sensing diode receives light from the light source indicating an onset of thermal runaway.

2. The apparatus of Claim 1, further comprising a battery enclosure, wherein the battery enclosure comprises one or more battery enclosure walls enclosing the battery cell and defining the battery compartment.

3. The apparatus of Claim 2, further comprising:
a vent housing,
wherein the membrane, the light source, and the light sensing diode are disposed within the vent housing, and
wherein the vent housing is disposed within the one of the one or more battery enclosure walls.

4. The apparatus of Claim 1, wherein the membrane comprises a porous material enabling one or more gases to pass through the membrane between the battery compartment and the external environment.

5. The apparatus of Claim 1, wherein the maximum internal pressure is between 20 and 25 pounds per square inch.

6. The apparatus of Claim 1, further comprising a controller, wherein the controller is electrically connected to the light source and the light sensing diode.

7. The apparatus of Claim 1, wherein the light source is configured to emit infrared light.

8. A method for detecting an onset of thermal runaway in a battery cell, the method comprising:
enabling a light source;
receiving an electrical output from a light sensing diode,
wherein the electrical output is associated with an intensity of light received at the light sensing diode,
wherein the light source and the light sensing diode are on opposite sides of a membrane disposed between a battery compartment comprising the battery cell and an external environment, and
wherein in an instance in which a pressure within the battery compartment exceeds a maximum internal pressure such that the membrane is ruptured, the light sensing diode receives light from the light source; and
determining the onset of thermal runaway based at least in part on the electrical output from the light sensing diode.

9. The method of Claim 8, wherein enabling the light source further comprises disabling and subsequently reenabling the light source.

10. The method of Claim 8, wherein determining the onset of thermal runaway further comprises detecting a voltage increase in the electrical output of the light sensing diode, indicating the light sensing diode is receiving light from the light source.

11. The method of Claim 8, wherein the membrane, the light source, and the light sensing diode are disposed within a vent housing, and wherein the vent housing is disposed within a battery enclosure wall of a battery enclosure comprising one or more battery enclosure walls positioned to enclose the battery cell.

12. A computer program product for detecting an onset of thermal runaway in a battery cell, the computer program product comprising at least one non-transitory computer-readable storage medium having computer-readable program code portions stored therein, the computer-readable program code portions comprising an executable portion configured to:
enable a light source;
receive an electrical output from a light sensing diode,
wherein the electrical output is associated with an intensity of light received at the light sensing diode,
wherein the light source and the light sensing diode are on opposite sides of a membrane disposed between a battery compartment comprising the battery cell and an external environment, and
wherein in an instance in which a pressure within the battery compartment exceeds a maximum internal pressure such that the membrane is ruptured, the light sensing diode receives light from the light source; and
determine the onset of thermal runaway based at least in part on the electrical output from the light sensing diode.

13. The computer program product of Claim 12, wherein enabling the light source further comprises disabling and subsequently reenabling the light source.

14. The computer program product of Claim 12, wherein determining the onset of thermal runaway further comprises detecting a voltage increase in the electrical output of the light sensing diode, indicating the light sensing diode is receiving light from the light source.

15. The computer program product of Claim 12, wherein the membrane, the light source, and the light sensing diode are disposed within a vent housing, and wherein the vent housing is disposed within a battery enclosure wall of a battery enclosure comprising one or more battery enclosure walls positioned to enclose the battery cell.
